# EUROPEAN PATENT SPECIFICATION

(11) **EP 4 337 071 B1**
(45) Date of publication and mention of the grant of the patent: **07.05.2025**
(21) Application number: 22726523.8
(22) Date of filing: 11.05.2022
(51) Int. Cl.: A47J 31/36

(54) **APPARATUS FOR MAKING A BEVERAGE BY BREWING A FOOD SUBSTANCE CONTAINED IN A CAPSULE**
VORRICHTUNG ZUR HERSTELLUNG EINES GETRÄNKS DURCH AUFBRÜHEN EINER IN EINER KAPSEL ENTHALTENEN LEBENSMITTELSUBSTANZ
APPAREIL DE PRÉPARATION DE BOISSON PAR INFUSION D'UNE SUBSTANCE ALIMENTAIRE CONTENUE DANS UNE CAPSULE

(30) Priority: 11.05.2021 IT 202100012077
(43) Date of publication of application: 20.03.2024
(73) Proprietor: Caffitaly System S.P.A., 40041 Gaggio Montano (BO) (IT)
(72) Inventor: PAOLETTI, Luciano, 50100 Firenze (IT); DIAMANTI, Maurizio, 40030 Castel di Casio (BO) (IT); TONELLI, Stefano, 40041 Gaggio Montano (BO) (IT); CASTELLI, Cristiano, 40046 Alto Reno Terme (BO) (IT)
(74) Representative: Marchi, Paolo
(86) International application number: PCT/IB2022/054393
(87) International publication number: WO 2022/238930

(56) References cited:
- EP-A1- 2 077 087
- WO-A1-2010/032271
- WO-A1-2012/158055
- WO-A1-2015/019249

## Description

This invention relates to the sector of apparatuses for making beverages. In particular, this invention relates to an apparatus for making a beverage by brewing a food substance, for example roasted and ground coffee or a soluble substance, which is contained in a capsule.

In general, the apparatuses for which this invention is intended comprise a brewing unit and a supporting structure which supports the brewing unit and other components of the apparatus.

The brewing unit, in turn, comprises a first member and a second member which are movable one relative to the other between a home position, in which the first member and the second member are spaced apart from each other and allow insertion or removal of the capsule in/from the brewing unit, and an operating position, in which the first member and the second member are coupled to one another and form a brewing chamber in which the capsule can be contained for making the beverage.

For this purpose the apparatus comprises beverage making means, which inject a liquid substance (in particular, pressurised hot water) into the capsule and collect from the capsule the beverage which is obtained from the brewing of the food substance by the liquid substance.

In some apparatuses the movement of the first member and of the second member one relative to the other is performed manually by a user using a lever or a handle, whilst in other apparatuses the movement is motor-driven and may even be automated.

This invention relates in particular to a type of apparatuses which is commonly known as "having a horizontal unit", that is to say, in which the relative movement of the first member and of the second member occurs along an axis which is substantially horizontal (or possibly slanting slightly relative to the horizontal line) and in which: insertion of a new capsule between the first member and the second member in the home position occurs from the top thanks to the force of gravity; in order to position the capsule in a respective housing in one of the two members, the capsule is pushed along said substantially horizontal axis; removal of the capsule from the brewing unit involves a return of the capsule along said axis and subsequently falling due to gravity along an unloading channel.

That generally involves two requirements: during insertion of the new capsule between the first member and the second member spaced apart from each other, the capsule must be prevented from going beyond the insertion position and falling into the unloading channel; after brewing, it must be ensured that the used capsule does not remain locked in the housing and that it is brought into a position in which it is free to fall into the unloading channel.

These requirements have already been dealt with in the prior art by providing respectively a retaining element, which acts during closing of the brewing unit, and an ejector, which acts during opening of the brewing unit.

In some prior art apparatuses, the ejector is a spring or another element on the bottom of the housing (such as in WO 2015/019249 A1, which discloses the preamble of claim 1, and in WO 2012/158055 A1), whilst in other prior art apparatuses the ejector is a translating element which interferes with the capsule (such as in WO 2010/032271 A1). In general, it's necessary that the retaining element and the ejector operate in such a way that they are well coordinated with each other and with the movement of the first member relative to the second member. That applies in particular when both the retaining element and the ejector act on a same perimetric flange of the capsule and therefore they must be operated in such a way that they do not interfere with each other.

The prior art comprises several solutions which have been proposed for this purpose. The prior art solutions differ from each other in the operating mechanism, in the number and in the shape of the parts, in the complexity of their production, in the reliability of their use.

In this context, the technical purpose which forms the basis of this invention is to make an apparatus for making a beverage which, as regards the mechanisms for the retaining of the capsule and its ejection, is advantageous compared with the prior art apparatuses or at least offers an alternative solution to the prior art solutions.

The technical purpose and the aims indicated are substantially achieved by an apparatus for making a beverage as described in independent claim 1. Particular embodiments of this invention are defined in the corresponding dependent claims.

According to one aspect of this invention, the apparatus comprises at least one retaining element and at least one ejector, which are parts separate from each other and movable one relative to the other. The retaining element and the ejector are slidably mounted relative to a supporting structure between respective positions: the retaining element is movable between a receiving position and a disengaging position; the ejector is movable between an extracted position and a retracted position.

A first member of the brewing unit is also slidably mounted relative to the supporting structure, along a line of movement, between a home position and an operating position. The retaining element and the ejector at least partly slide along lines which are parallel to the line of movement of the first member.

The first member of the brewing unit mechanically operates in conjunction with the retaining element and with the ejector, so that the movements of the latter two are controlled by the first member: the movement of the first member from the home position to the operating position causes the movement of the retaining element from the receiving position to the disengaging position and causes the movement of the ejector from the extracted position to the retracted position; the movement of the first member from the operating position to the home position causes the movement of the retaining element from the disengaging position to the receiving position and causes the movement of the at least one ejector from the retracted position to the extracted position. That is useful for ensuring that the retaining element and the ejector are located in the correct position both when the brewing unit is open and when the brewing unit is closed, thanks to the fact that the movements of the retaining element and of the ejector are caused - in a substantially unique way - by the first member when it moves between the home position and the operating position, and vice versa.

According to another aspect of this invention, the apparatus comprises a guide which mechanically operates in conjunction with the retaining element, constraining its movement and ensuring that in a stretch of the movement the retaining element is shifted transversally to the line of movement of the first member. That is useful for implementing in a simple way the release of the capsule by the retaining element.

In particular, the guide is stationary relative to the supporting structure and specifically it extends along a flank of the brewing unit, in the supporting structure. That is useful for guaranteeing that the transversal shifting of the retaining element occurs in the correct stretch and at the right moment during the movement of the parts.

In at least some embodiments, mechanical operation of the first member in conjunction with the retaining element and with the ejector occurs by means of respective portions which, abutting against or making contact with each other, transmit a force which pushes (or drags) what must be moved. In other words, a mechanical constraint is created between the parts, which is removed only when specific positions of the parts are reached. That is useful for ensuring that the movements of the parts effectively occur as designed.

In the context of this description, "mechanically operating in conjunction" means that the parts involved have components which interact with each other (for example, making contact with each other) creating mechanical constraints which cause or limit the movements of one part relative to the other.

Further features and the advantages of this invention will be more apparent in the detailed description of a preferred, but non-limiting, embodiment of an apparatus for making a beverage illustrated in the accompanying drawings, in which:
- Figure 1 shows a rear perspective view of an apparatus for making a beverage in accordance with this invention and with some components removed to highlight the components of interest, in an open condition and with a capsule already inserted;
- Figure 2 shows a front perspective view of the apparatus of Figure 1;
- Figure 3 shows a top view of the apparatus of Figure 1, sectioned according to a horizontal section plane;
- Figure 4 shows a front perspective view of the apparatus of Figure 1, in a first intermediate position;
- Figure 5 shows a rear perspective view of the apparatus of Figure 4;
- Figure 6 shows a top view of the apparatus of Figure 4, sectioned according to a horizontal section plane;
- Figure 7 shows a front perspective view of the apparatus of Figure 1, in a closed position;
- Figure 8 shows a rear perspective view of the apparatus of Figure 7;
- Figure 9 shows a top view of the apparatus of Figure 7, sectioned according to a horizontal section plane;
- Figure 10 shows a rear perspective view of the apparatus of Figure 1, in a second intermediate position;

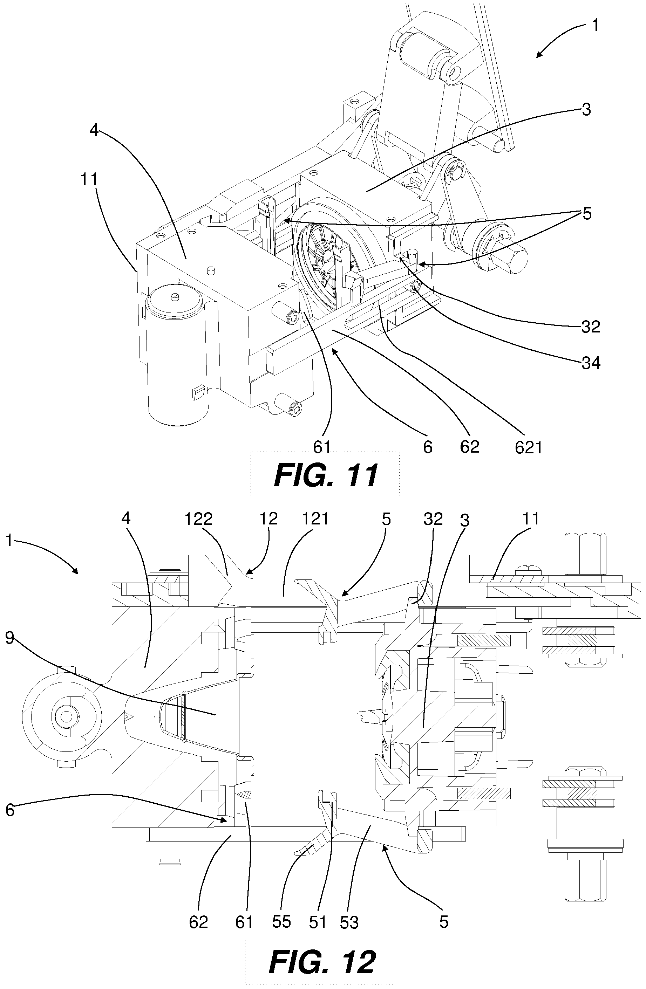

- Figure 11 shows a front perspective view of the apparatus of Figure 10;
- Figure 12 shows a top view of the apparatus of Figure 10, sectioned according to a horizontal section plane;
- Figure 13 shows a first perspective view of a retaining element which is part of the apparatus of Figure 1;
- Figure 14 shows a second perspective view of the retaining element of Figure 13;
- Figure 15 shows a plan view of the retaining element of Figure 13;
- Figure 16 shows a first perspective view of an ejector which is part of the apparatus of Figure 1;
- Figure 17 shows a second perspective view of the ejector of Figure 16;
- Figure 18 shows an enlarged detail from Figure 1;

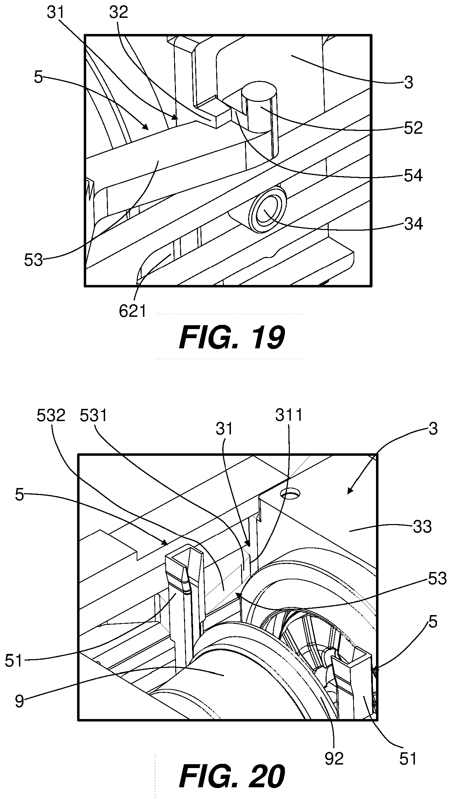

- Figure 19 shows a first enlarged detail from Figure 4; and
- Figure 20 shows a second enlarged detail from Figure 4.

In the accompanying figures, an apparatus for making a beverage according to this invention has been globally indicated with the reference number 1.

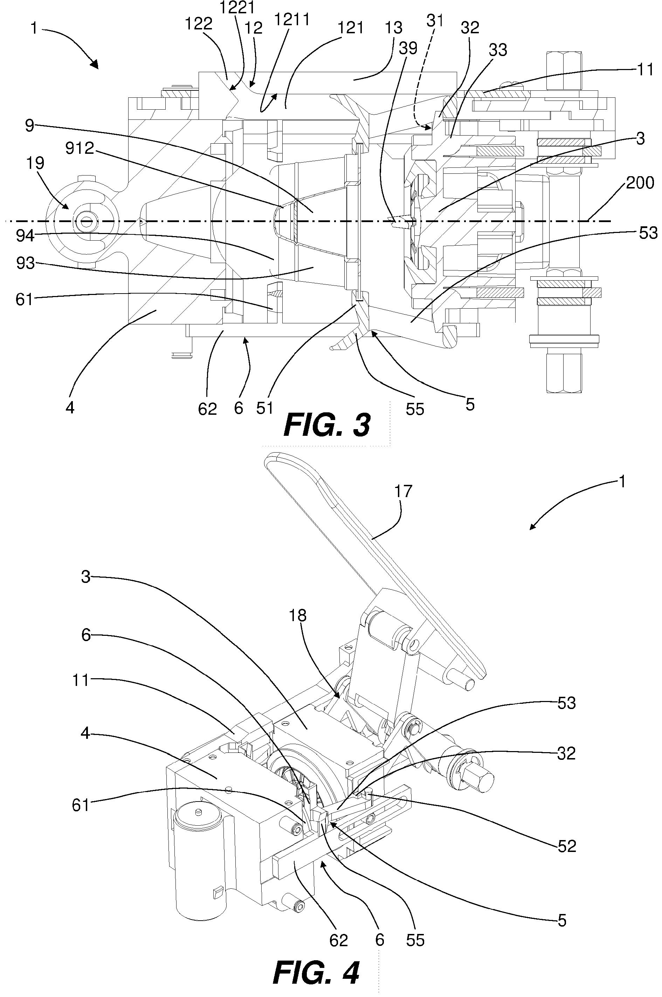

It should be noticed that what is shown in the figures does not correspond to a complete apparatus 1, but only to what is necessary to illustrate this invention. In fact the figures do not show an outer casing of the apparatus 1 (which in contrast is present in apparatus for sale) and several other components which have been removed, in particular from a right-hand flank of the apparatus 1 (which is the lower flank in Figure 3), in order to highlight what is of interest. The figures also show a capsule 9 inserted in the apparatus 1. Details about aspects which are in themselves known and not important for understanding this invention have been omitted from the figures and have not been described. For everything that is not described in detail herein, reference can be made to the prior art and in particular to international patent application No. WO 2015/019249 A1 and to Italian patent application No. 102018000004761, both by this same Applicant.

In order to make the beverage, the apparatus 1 uses a capsule 9, in particular a disposable capsule 9, which contains a food substance (for example coffee powder or a soluble substance, not illustrated in the accompanying figures). The apparatus 1 allows the beverage to be obtained by brewing of the food substance which is contained in the capsule 9.

The capsule 9 comprises a cup-shaped containment body 91, which houses the food substance, and a perimetric flange 92 projecting from the containment body 91 at a top edge 911 of the containment body 91 itself. In general, the containment body 91 comprises a lateral wall 93, which extends between the top edge 911 and a bottom edge 912, and a bottom wall 94, which is connected to the bottom edge 912; typically, the lateral wall 93 has a frustoconical or a cylindrical shape. The capsule 9 is also provided with a top lid 95, for example an oxygen-tight film, which is fixed to the perimetric flange 92 and closes the containment body 91, isolating from the outside the food substance contained in the containment body 91.

The apparatus 1 comprises a supporting structure 11 which supports inner components of the apparatus 1 itself; for example, the supporting structure 11 is a frame of the apparatus 1. An outer casing (not illustrated in the figures) which contains and protects the inner components of the apparatus 1 is fixed to the supporting structure 11 and can be removed for example for maintenance or for substituting the inner components of the apparatus 1. In other embodiments, the outer casing itself forms the supporting structure 11.

The inner components of the apparatus 1 which relate to this invention are described below.

The apparatus 1 comprises a brewing unit 2 which in turn comprises a first member 3 and a second member 4. The first member 3 is movable relative to the second member 4 between an operating position and a home position. In particular, as shown in the figures, the second member 4 is fixed and stationary relative to the supporting structure 11, whilst the first member 3 is movable relative to the supporting structure 11. In other embodiments the first member 3 and the second member 4 may both be movable relative to the supporting structure 11.

In the embodiment illustrated, the second member 4 has a housing 41 which is configured to house the containment body 91 of the capsule 9, whilst the first member 3 is a member for closing the housing 41 and in use faces towards the top lid 95 of the capsule 9.

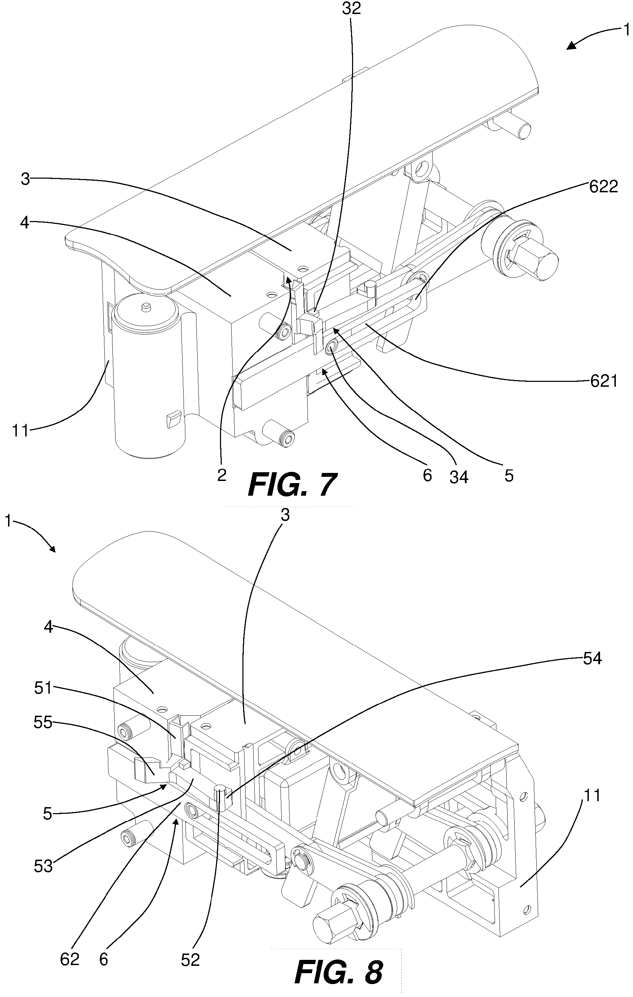

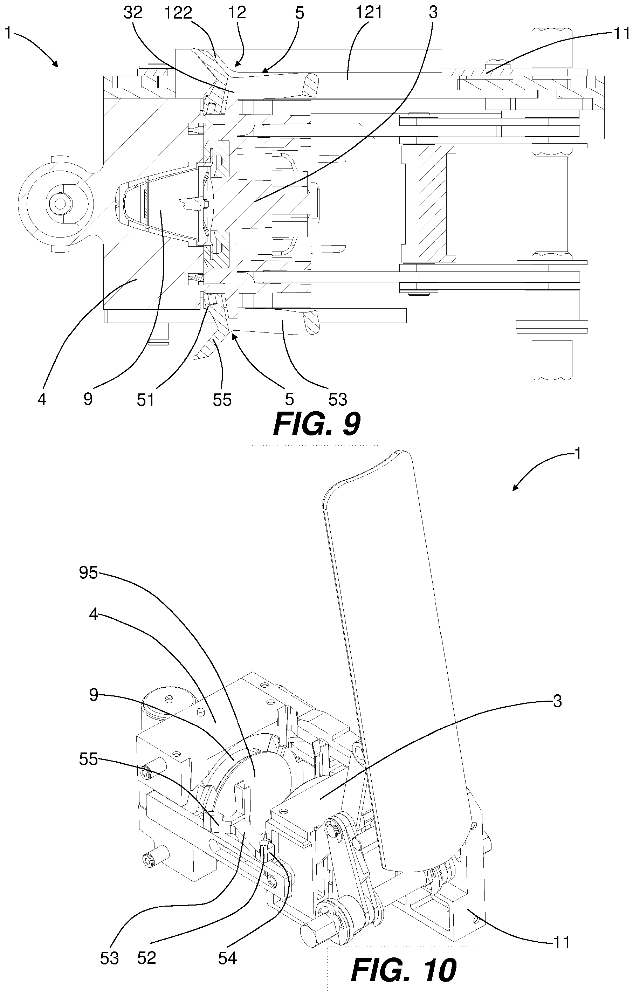

In the operating position, which is shown in Figures 7 to 9, the first member 3 and the second member 4 are coupled to one another, thereby forming a brewing chamber in which, in use, the capsule 9 is contained. Basically, the brewing unit 2 is closed and the beverage can be made.

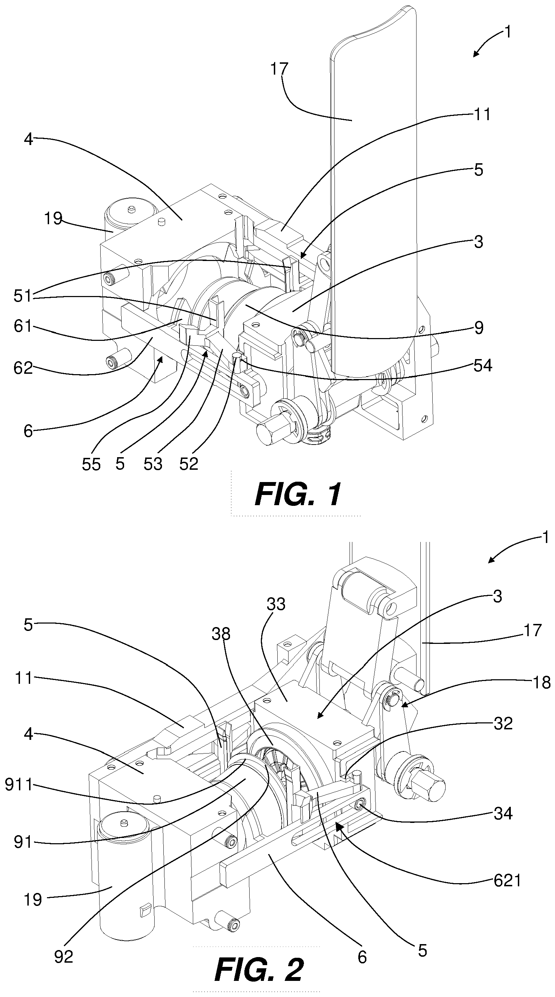

In the home position, which is shown in Figures 1 to 3, the first member 3 and the second member 4 are spaced apart from each other and thereby allow, in use, insertion of the capsule 9 between the first member 3 and the second member 4 (before making the beverage), or removal of the capsule 9 from the brewing unit 2 (after the beverage has been made). Basically, the brewing unit 2 is open.

The first member 3 is slidably mounted relative to the supporting structure 11 along a line of movement between the operating position and the home position, and vice versa between the home position and the operating position. In Figure 3, the line of movement is represented by a straight line labelled with the reference number 200.

Specifically, the brewing unit 2 is of the type extending horizontally, that is to say, in which the line of movement of the first member 3 is a substantially horizontal straight line during normal use of the apparatus 1. Specifically, insertion of the capsule 9 occurs from the top, through a window or insertion opening made in the casing (not shown) of the apparatus 1, and the capsule 9 has a central axis which is substantially horizontal (that is to say, the perimetric flange 92 is in a substantially vertical plane, orthogonal to the line of movement 200).

However, the subject matter of this invention may be applied to other types of brewing units, not necessarily extending horizontally.

In the embodiment illustrated, the movement of the first member 3 is manually driven by a user by means of a lever or a handle 17, which pivots at the supporting structure 11 and acts on a toggle joint 18. In other embodiments the movement is motor-driven and may even be automated. The aspects relative to the movement of the members of the brewing unit 2 are already known in themselves to experts in the field and are not described in further detail.

As indicated above, the second member 4 of the brewing unit 2 has the housing 41 for housing the containment body 91 of the capsule 9; this housing 41 has an opening 411 and a concavity which both face towards the first member 3 of the brewing unit 2. Essentially, the housing 41 is shaped in such a way that the capsule 9 is inserted in it during the movement of the first member 3 from the home position to the operating position, as will be made clearer below.

The first member 3, when it is in the operating position, closes the opening 411 of the housing 41, so that, in use, the perimetric flange 92 of the capsule 9 is interposed between the first member 3 itself (which in particular is provided with a gasket 38 to seal with the capsule 9) and a perimetric edge 412 of the opening 411 of the housing 41. The perimetric flange 92 is enclosed between the first member 3 and the second member 4. In general, the housing 41 is shaped in such a way that it substantially has the same shape as the containment body 91 of the capsule 9, that is to say, the housing 41 mostly follows the shape of the containment body 91; that allows to obtain an improved coupling between the second member 4 and the capsule 9 when the latter is inserted in the housing 41. In the embodiment illustrated, the entire containment body 91 of the capsule 9 can be housed in the housing 41. In other embodiments, only a portion of the containment body 91 is housed in the housing 41; for example this may be the case in which the perimetric flange 92 is in a position interposed between the top edge 911 and the bottom edge 912 of the containment body 91, rather than at the top edge 911.

The apparatus 1 also comprises means for piercing the capsule and means for making the beverage. Specifically, the first member 3 comprises a first piercer 39 intended to pierce the top lid 95 of the capsule 9 to create a water infeed opening; the second member 4 comprises, on the bottom of the housing 41, a second piercer 49 intended to pierce the bottom wall 94 of the capsule 9 to create a beverage outfeed opening. The beverage making means, which are not shown in the figures, comprise for example: a water tank; a pump; a boiler; pipes for feeding pressurised heated water to the capsule 9 through the infeed opening in the top lid 95; pipes for transferring the beverage coming from the outfeed opening in the bottom wall 94 to a dispenser 19, from which the beverage is dispensed to a cup below or to another container. All of these means can be made in the known way and do not require a detailed description herein.

According to this invention, the brewing unit 2 comprises at least one retaining element 5 and at least one ejector 6, which are parts separate from each other and are movable one relative to the other.

It should be noticed that, in the embodiment illustrated, the brewing unit 2 comprises two retaining elements 5, positioned on opposite flanks of the brewing unit 2 and symmetrically relative to a longitudinal plane thereof (that is to say, relative to a vertical plane which contains a central axis corresponding to the line of movement 200 shown in Figure 3). Moreover, the brewing unit 2 comprises two ejectors 6, also positioned on opposite flanks of the brewing unit 2 and symmetrically relative to the longitudinal plane. Although the use of a pair of retaining elements 5 and of a pair of ejectors 6 is in general more useful because the interaction with the capsule 9 is more balanced and effective, this invention can also be applied with a single retaining element 5 and a single ejector 6.

The retaining element 5 is configured to receive the perimetric flange 92 of the capsule 9, when the first member 3 is in the home position and the capsule 9 is inserted between the first member 3 and the second member 4 of the brewing unit 2, and to retain that perimetric flange 92 of the capsule 9 during the movement of the first member 3 from the home position to the operating position, that is to say, during closing of the brewing unit 2. Essentially, the retaining element 5 has a function of preventing the capsule 9 inserted in the open brewing unit 2 from being able to fall any further downwards or in any case from being able to be positioned in an incorrect way preventing its subsequent positioning in the housing 41 of the second member 4. The retaining element 5 acts at least until the degree of insertion of the containment body 91 of the capsule 9 in the housing 41 makes its action superfluous.

The retaining element 5 is slidably mounted relative to the supporting structure 11 and is movable between a receiving position, in which the retaining element 5 is positioned to receive the perimetric flange 92 of the capsule 9, and a disengaging position, in which the retaining element 5 is disengaged from the perimetric flange 92 of the capsule 9. Essentially: in the receiving position the retaining element 5 is ready to receive and retain the capsule 9 which is inserted through the insertion opening above; in the disengaging position the retaining element 5 has released the capsule 9 because the latter, already being sufficiently inserted in the housing 41, no longer needs it.

The movement of the retaining element 5 from the receiving position to the disengaging position comprises a first stretch and a second stretch; the first stretch is parallel to the line of movement 200 of the first member 3, whilst the second stretch is divergent from the line of movement 200. In this way, in the second stretch the retaining element 5 is shifted transversally to the line of movement 200 and, in use, is moved away from the perimetric flange 92 of the capsule 9.

In contrast, the ejector 6 is configured to eject the capsule 9 from the housing 41 of the second member 4 during the movement of the first member 3 from the operating position to the home position, that is to say, during opening of the brewing unit 2. Similarly to the retaining element 5, the ejector 6 is also slidably mounted relative to the supporting structure 11. The ejector 6 is movable relative to the second member 4, parallel to the line of movement 200 of the first member 3, between an extracted position and a retracted position. The ejector 6 comprises a thrust portion 61 which is configured to push the perimetric flange 92 of the capsule 9 away from the perimetric edge 412 of the opening 411 of the housing 41, during the shifting from the retracted position to the extracted position. Essentially: in the retracted position the ejector 6 does not interfere with the position of the capsule 9 in the housing 41 and therefore the capsule 9 can be enclosed in the brewing chamber formed by the closed brewing unit 2; in the extracted position the thrust portion 61 of the ejector 6 projects from the second member 4 towards the first member 3. Shifting from the retracted position to the extracted position, the ejector 6 forces the capsule 9 out of the housing 41 and therefore extracts (or ejects) it from the housing 41 itself, until the capsule 9 is free to fall downwards due to gravity. The retaining element 5 and the ejector 6 operate in an alternating way: during closing of the brewing unit 2, the capsule 9 is retained by the retaining element 5 and its positioning in the housing 41 is not disturbed by the ejector 6; during opening of the brewing unit 2, the capsule 9 is not retained by the retaining element 5 and is subjected to the action of the ejector 6. This invention relates to the implementation of a mode for coordinated movement of the retaining element 5 and of the ejector 6 in order to achieve that.

The movement of the retaining element 5, between the receiving position and the disengaging position and vice versa, and the movement of the ejector 6, between the extracted position and the retracted position and vice versa, are caused by the movement of the first member 3 which mechanically operates in conjunction with both the retaining element 5 and the ejector 6, thereby controlling their positions. In this way, the movement of the first member 3 from the home position to the operating position, that is to say closing of the brewing unit 2, causes the movement of the retaining element 5 from the receiving position to the disengaging position and the movement of the ejector 6 from the extracted position to the retracted position; moreover, the movement of the first member 3 from the operating position to the home position, that is to say, opening of the brewing unit 2, causes the movement of the retaining element 5 from the disengaging position to the receiving position and the movement of the ejector 6 from the retracted position to the extracted position.

The retaining element 5 and the ejector 6 will be described in detail below, together with other significant aspects of the apparatus 1.

In order to implement the transversal shifting of the retaining element 5 in the second stretch of the movement, that is to say, the stretch which is divergent from the line of movement 200, the apparatus 1 comprises a guide which mechanically operates in conjunction with the retaining element 5.

In particular, the guide extends along a flank of the brewing unit 2 and is made in the supporting structure 11 (in particular in a wall 13) of the apparatus 1. The guide comprises (or is constituted of) a lane 12 which has a first guiding stretch 121 and a second guiding stretch 122: the first guiding stretch 121 is parallel to the line of movement 200 of the first member 3, whilst the second guiding stretch 122 is divergent from the line of movement 200 of the first member 3. Essentially, the second guiding stretch 122 and the first guiding stretch 121 are respective pieces or stretches of the lane 12, are one after the other and are engaged sequentially by the retaining element 5. For this purpose, the retaining element 5 comprises a follower 55 which engages with the lane 12 and is movable along the lane 12. Since the follower 55 moves along both of the pieces 121, 122, in the embodiment illustrated the mechanical operation of the retaining element 5 in conjunction with the guide is not limited to the divergent second stretch of its movement but also relates to the first stretch.

It should be noticed that in other embodiments the movement of the retaining element 5 may comprise further stretches which are interposed between the first stretch and the second stretch and/or which are placed upstream of the first stretch and/or which are placed downstream of the second stretch.

In order to move the retaining element 5, in the embodiment illustrated the first member 3 comprises a first thrust element 31 and a second thrust element 32 which are movable together with a main body 33 of the first member 3. In particular, the first thrust element 31 and the second thrust element 32 are made in one piece with the main body 33. For example the first thrust element 31 is a portion of an edge of the main body 33, whilst the second thrust element 32 is a tooth which projects from the first thrust element 31 or directly from the main body 33.

The first thrust element 31 makes contact with and pushes the retaining element 5 during the movement of the first member 3 from the home position to the operating position and is disengaged from the retaining element 5 when the latter reaches the disengaging position. In contrast, the second thrust element 32 makes contact with and pushes the retaining element 5 during the movement of the first member 3 from the operating position to the home position. In particular, the second thrust element 32 makes contact with a raised portion 54 of the retaining element 5.

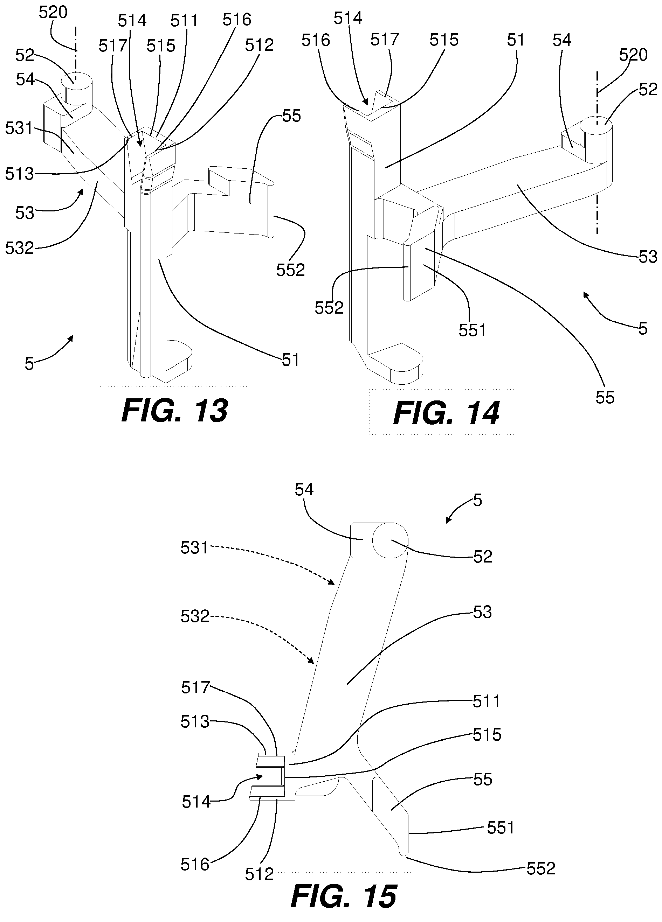

In the embodiment illustrated, the retaining element 5 comprises a receiving portion 51 which defines a seat 514 for receiving the perimetric flange 92 of the capsule 9; the receiving portion 51 has an elongate shape and the seat 514 is a furrow which extends in it in such a way as to accommodate an angular sector of the perimetric flange 92. As shown in Figures 13 to 15, the receiving portion 51 has a base wall 511 and two sides, respectively a first side 512 and a second side 513, which are substantially parallel to each other and extend starting from the base wall 511. The receiving portion 51 has a U-shaped or C-shaped cross-section, in such a way that the seat 514 is laterally delimited by two flanks, respectively a first flank 516 defined by the first side 512 and a second flank 517 defined by the second side 513, and by a bottom 515, which joins the first flank 516 and the second flank 517 and which is defined by the base wall 511. In contrast, the base wall 511 of the receiving portion 51 defines a bottom 515 of the seat 514.

In order to prevent the capsule 9 from falling when the perimetric flange 92 is received by the seat 514, the base wall 511 is angled towards the inside of the seat 514, following the curved profile of the perimetric flange 92, at a lower part of the receiving portion 51, so that the perimetric flange 92 leans against the angled part. The shape of the seat 514, which in fact is long and narrow, holds the capsule 9 with its central axis substantially horizontal, preventing the capsule 9 from being tilted downwards, and the angled lower part of the base wall 511 prevents the capsule 9 from falling downwards.

It should be noticed that in the embodiment illustrated there are two opposite retaining elements 5 present which retain the perimetric flange 92 on opposite sides, therefore capsule 9 retaining derives from the combined action of the two retaining elements 5. However, it would be possible to achieve a similar result using a single retaining element 5, for example by increasing the horizontal extent of the receiving portion 51 in the lower part.

The receiving portion 51 may be made in a different way in order to achieve the same aim, even based on what is already present in the prior art.

The retaining element 5 also comprises a pin 52 and an arm 53 which connects the pin 52 to the receiving portion 51. The pin 52 defines an axis of rotation 520 about which the retaining element 5 is rotatable. In the first stretch of the movement, parallel to the line of movement 200 of the first member 3, the rotation of the retaining element 5 about the axis of rotation 520 defined by the pin 52 is prevented by the guide and therefore the retaining element 5 only translates; in the second stretch of the movement, which is divergent from the line of movement 200 of the first member 3, the rotation of the retaining element 5 about the axis of rotation 520 is allowed and therefore the movement of the retaining element 5 in the second stretch is a combination of a translating movement, parallel to the line of movement 200 of the first member 3, and of a rotary movement, about the axis of rotation 520. The result of that rotary-translating movement is that the receiving portion 51 is shifted transversally to the line of movement 200.

As illustrated in the figures, the pin 52 may be positioned at the raised portion 54, which is intended to make contact with the second thrust element 32 of the first member 3, is raised relative to the arm 53 and is located near the pin 52, which projects relative to the raised portion 54. The pin 52 and the raised portion 54 are interposed between a flank of the main body 33 of the first member 3 and a surface 1211 of the lane 12 (Figure 3). Said surface 1211 extends parallel to the line of movement 200 and faces towards the inside of the apparatus 1, in particular facing a flank of the main body 33.

As can be seen in the figures, at a first end of the arm 53 the pin 52 and the raised portion 54 are present, whilst at a second end of the arm 53 the receiving portion 51 and the follower 55 are present. The follower 55 projects from the arm 53 and specifically is a wing which, in a plan view (Figure 15), is angled relative to the arm 53 and extends from the opposite side relative to the receiving portion 51. The follower 55 has an outer face 551 which, when the follower 55 is in the first guiding stretch 121, is against said surface 1211 of the lane 12 (Figure 3) and that prevents rotation of the retaining element 5 towards the outside; the follower 55 also has a tip 552 which, at the end of the first guiding stretch 121, makes contact against an angled surface 1221 of the second guiding stretch 122, which diverts the follower into the second guiding stretch 122 and forces the retaining element 5 to rotate towards the outside. In more general terms: when the follower 55 engages with the lane 12 in the second guiding stretch 122, the follower 55 makes the retaining element 5 rotate about the axis of rotation 520 defined by the pin 52 and in that way shifts it transversally.

The arm 53 has a face 531 which is substantially facing towards the inside of the apparatus 1 and which, when the retaining element 5 is in the receiving position, is angled relative to the line of movement 200. The face 531 is configured to make contact with the first thrust element 31 of the first member 3 when the first member 3 is moved from the home position to the operating position and, thanks to the angle of the face 531 and the operation in conjunction with the first guiding stretch 121 which prevents the rotation of the retaining element 5, the resulting force pushes the retaining element 5 parallel to the line of movement 200.

In particular, the contact between the first face 531 and the first thrust element 31 occurs at a corner 311 of the first thrust element 31. When the retaining element 5 engages with the second guiding stretch 122, it can rotate towards the outside about the axis of rotation 520, until (in the disengaging position) the face 531 is parallel to the line of movement 200. In this condition, the first thrust element 31 can no longer push on the face 531 and therefore, with the further forward movement of the first member 3, the corner 311 slides along the face 531 itself.

As regards the ejector 6, as already said it is movable between the extracted position and the retracted position, and vice versa. In the extracted position (Figures 1 to 3), the thrust portion 61 of the ejector 6 is positioned between the retaining element 5 and the second member 4; in the retracted position (Figures 7 to 9), the thrust portion 61 is contained between the first member 3 and the second member 4, whilst the receiving portion 51 of the retaining element 5 is located at a side and outside relative to the thrust portion 61.

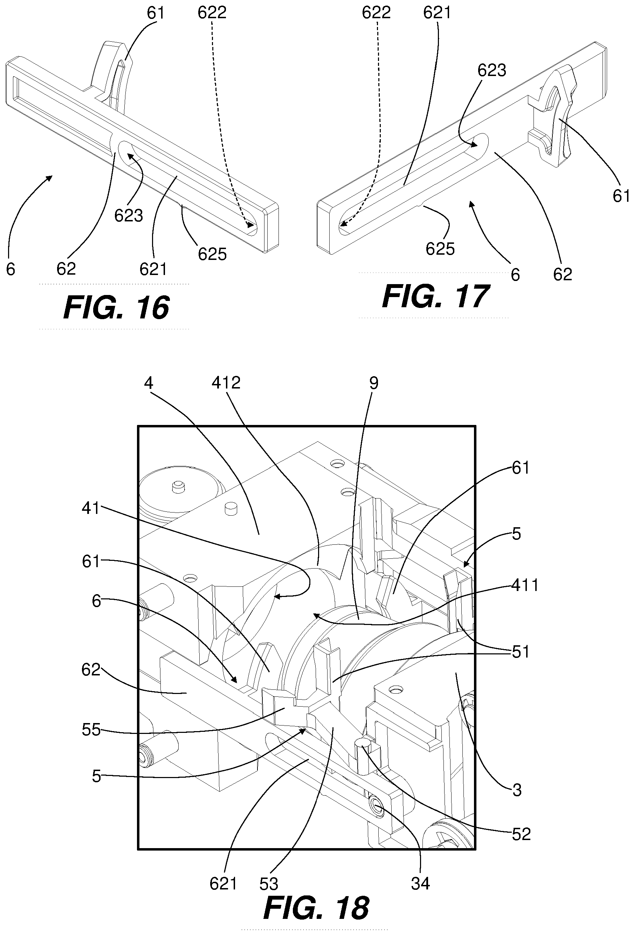

In particular, as can be inferred from Figure 18, the thrust portion 61 of the ejector 6 forms a part of the perimetric edge 412 of the opening 411 of the housing 41 of the second member 4. In other words, the perimetric edge 412 made in the second member 4 has an interrupted stretch which forms a cavity shaped to match the thrust portion 61, which occupies the cavity when the ejector 6 is in the retracted position. In that position, the thrust portion 61 and the second member 4 jointly define the perimetric edge 412 which, in use, is in contact with the perimetric flange 92 of the capsule 9. When the ejector 6 is in the extracted position, the perimetric edge 412 is interrupted and the thrust portion 61 is spaced apart from the interrupted perimetric edge 412: the thrust portion 61 is interposed between the first member 3 and the second member 4 and is spaced apart from both. The perimetric edge 412 shaped in this way combines a continuity of support for the perimetric flange 92 of the capsule 9 with a simplicity of actuation of the ejector 6 during opening of the brewing unit 2. In fact, the thrust portion 61 is in contact with the perimetric flange 92 of the capsule 9 even when the brewing unit 2 is closed and therefore the movement of the ejector 6 immediately causes the movement of the capsule 9.

The movement of the ejector 6, at least in the movement towards the extracted position, is caused by the interaction between a projecting tooth (which is part of one of either the first member 3 or the ejector 6) and a respective contact element (which is part of the other of either the first member 3 or the ejector 6). In the specific embodiment illustrated, the first member 3 comprises the projecting tooth, labelled with the reference number 34, whilst the ejector 6 comprises the contact element (labelled with the reference number 622) for the projecting tooth 34. However, in alternative embodiments the arrangement of the projecting tooth and of the contact element may be inverted (that is to say, the ejector comprises the projecting tooth and the first member comprises the contact element).

When the first member 3 is in the operating position, the projecting tooth 34 is spaced apart from the contact element 622. During the movement of the first member 3 from the operating position to the home position, that is to say, during opening of the brewing unit 2, the projecting tooth 34 makes contact with the contact element 622. The contact between the projecting tooth 34 and the contact element 622 causes a mechanical constraint (due to contrast of parts) between the ejector 6 and the first member 3, so that the ejector 6 is dragged towards the retracted position by the first member 3 moving towards the home position. Specifically, the contact element 622 is a stop for the projecting tooth 34 and is part of a slot 621 or of a track which extends parallel to the line of movement 200 of the first member 3. The projecting tooth 34 is received in the slot 621 or in the track and can run in it, parallel to the line of movement 200.

In the embodiment illustrated, the ejector 6 comprises an elongate portion 62 which extends parallel to the line of movement 200 and defines the slot 621 inside which the projecting tooth 34 of the first member 3 slides. The contact element 622 is one end of the slot 621, the end which is furthest from the thrust portion 61. Essentially, the slot 621 is an elongate opening.

The thrust portion 61 projects from the elongate portion 62 towards the inside of the brewing unit 2, preferably perpendicularly to the line of movement 200. The elongate portion 62 and the thrust portion 61 are made in one piece.

The second member 4 has, on its outer surface, a groove 42 in which the elongate portion 62 is slidably mounted. That groove 42 acts as a guide for the movement of the ejector 6 and constrains it to perform a translation along the line of movement 200. In other embodiments, the groove 42 may be substituted with a through hole in the second member 4 or may be made in the supporting structure 11. Other embodiments which allow sliding of the elongate portion 62 are obviously possible.

In the particular embodiment illustrated, the elongate portion 62 has a projection or a small tooth 625 which projects externally. The small tooth 625 creates a weak constraint with the supporting structure 11 relative to which the ejector 6 slides. That weak constraint is sufficient to prevent a friction force between the projecting tooth 34 and the slot 621 from being able to move the ejector 6 in an initial step of opening of the brewing unit 2, but is easily overcome when the projecting tooth 34 makes contact against the contact element 622 (that is to say, the stop of the slot 621) and pulls the ejector 6. For example, the small tooth 625 operates in conjunction with an opposite small tooth in the supporting structure 11 which is jumped over, during opening and closing of the brewing unit 2, thanks to a small vertical play of the elongate portion 62 or to a limited elastic deformability of the parts.

That is useful for being even more certain that the movement of the ejector 6 occurs with a calibrated delay relative to the movement of the first member 3 and relative to the movement of the retaining element 5, completely avoiding the risk that the capsule 9 may be extracted too early and may accidentally be hooked by the retaining element 5. However, it should be noticed that the presence of the small tooth 625 is a precaution which is not strictly necessary. In fact the resistance opposed by the capsule 9 in the housing 41 is usually much greater than the friction between the projecting tooth 34 and the slot 621, therefore it is the capsule 9 which prevents a too early movement of the ejector 6.

As regards the movement of the ejector 6 from the extracted position to the retracted position, in one embodiment it is caused by the interaction between the projecting tooth 34 and a second contact element, for example the other end 623 of the slot 621 (the end which is closest to the thrust portion 61). In contrast, in the embodiment illustrated, it is caused by the thrust which the thrust portion 61 initially receives from the receiving portion 51 of the retaining element 5 (with which it makes contact) and then from the perimetric flange 92 of the capsule 9; in this case, the first member 3 causes the movement of the ejector 6 towards the retracted position by acting by means of the retaining element 5 and by means of the capsule 9, not acting directly on the ejector 6. As shown in the figures, the retaining element 5 and the ejector 6 are positioned on a same flank of the brewing unit 2. Moreover, as already indicated above, the apparatus 1 comprises two retaining elements 5 and two ejectors 6, each made according to what is described above. The first retaining element 5 and the second retaining element 5 are positioned on opposite flanks (right-hand flank and left-hand flank) of the brewing unit 2 and are positioned symmetrically relative to the longitudinal plane of the brewing unit 2; although physically independent of each other, they are moved simultaneously and in a coordinated way. The same also applies for the first ejector 6 and for the second ejector 6. That symmetrical arrangement is useful for obtaining more balanced and more reliable operation, compared with the presence of only one retaining element 5 and only one ejector 6.

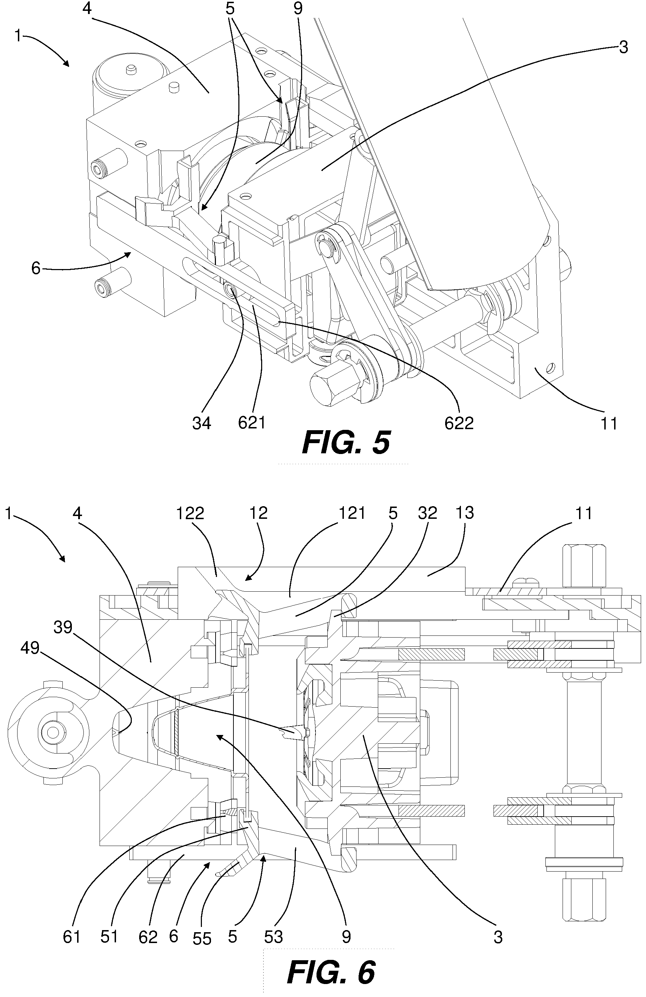

In short, an operating cycle of the apparatus 1 is as follows:
- the brewing unit 2 is open: the first member 3 is in the home position, the retaining element 5 is in the receiving position, the ejector 6 is in the extracted position; a capsule 9 has been inserted in the brewing unit 2 and is retained by the retaining element 5 (Figures 1 to 3);
- first step of the movement for closing the brewing unit 2: the first member 3 is shifted towards the second member 4; the first thrust element 31 makes contact with the retaining element 5 and pushes it; the containment body 91 of the capsule 9 begins to enter the housing 41; the retaining element 5 makes contact with the ejector 6 and pushes it; in Figures 4 to 6, the retaining element 5 has arrived at the end of the first stretch of its movement and the ejector 6 has started to move towards the retracted position;
- second step of the movement for closing the brewing unit 2: the first member 3 is shifted further towards the second member 4; the retaining element 5 is pushed into the second stretch of its movement and releases the capsule 9, which is almost completely inserted in the housing 41; the perimetric flange 92 of the capsule 9 pushes the ejector towards the retracted position; in Figures 7 to 9, the first member 3 is in the operating position and the brewing unit 2 is closed, the retaining element 5 is in the disengaging position, the ejector 6 is in the retracted position, the capsule 9 is in the brewing chamber and its perimetric flange 92 is contained between the perimetric edge 412 and the sealing gasket 38, the piercers 39, 49 have pierced the top lid 95 and the bottom wall 94 of the capsule 9;
- beverage making and dispensing;
- first step of the movement for opening the brewing unit 2: the first member 3 is shifted towards the home position; after an initial stretch of stroke, the second thrust element 32 makes contact with the retaining element 5 and pushes it towards the receiving position; after a second stretch of stroke, the projecting tooth 34 makes contact with the contact element 622 at the end of the slot 621 and starts to push the ejector 6 towards the extracted position; the ejector 6 pushes the perimetric flange 92 of the capsule 9 and therefore the latter starts to come out of the housing 41;
- second step of the movement for opening the brewing unit 2: the first member 3 is shifted further towards the home position, bringing with it the retaining element 5 and the ejector 6; when the capsule 9 is completely extracted from the housing 41, it falls downwards and leaves the brewing unit 2; at the end of the opening movement, the first member 3 is in the home position, the retaining element 5 is in the receiving position and the ejector is in the extracted position: the apparatus 1 is ready for a new cycle.

It should be noticed that the first member 3, the retaining element 5 and the ejector 6 are constrained to the supporting structure 11 (directly or indirectly) independently of each other and they are also movable relative to the supporting structure 11 with only one degree of freedom. For each of those components, the movement path - relative to the supporting structure 11 - between their limit positions (that is to say, the position with brewing unit 2 open and the position with brewing unit 2 closed) is uniquely defined.

The retaining element 5 and the ejector 6 are physically interposed between the first member 3 and the second member 4; the first member 3 mechanically operates in conjunction (thanks to respective parts which make contact with each other) with the retaining element 5 and with the ejector 6 and cases their movements. Consequently, during use of the apparatus 1 the movements and the positions required for those components are obtained in a precise way and without possibility of error, since the retaining element 5 and the ejector 6 do not have degrees of freedom which allow their accidental deviation from what has been set. There is no need for other elements (such as springs) which force the components towards predetermined positions.

Therefore, this invention is useful for supplying an apparatus which is simple and mechanically reliable.

It should also be noticed that the number of components required for operation may be minimised: in the embodiment illustrated, the retaining element 5 and the ejector 6 are each a single part which is constrained to the supporting structure 11 and which is moved by the movable member of the brewing unit, without requiring the movement of other parts.

Therefore this invention is useful for supplying an apparatus for making a beverage comprising both a retaining element 5 and an ejector 6, with less complexity than prior art apparatuses.

## Claims

1. An apparatus (1) for making a beverage by brewing a food substance contained in a capsule (9), the capsule (9) comprising a cup-shaped containment body (91) and a perimetric flange (92) projecting from the containment body (91),
wherein the apparatus (1) comprises a supporting structure (11) and a brewing unit (2) comprising a first member (3) and a second member (4), the first member (3) being movable relative to the second member (4) between an operating position, in which the first member (3) and the second member (4) are coupled to one another and form a brewing chamber (21) in which, in use, the capsule (9) is contained, and a home position, in which the first member (3) and the second member (4) are spaced apart from each other and allow, in use, insertion of the capsule (9) between the first member (3) and the second member (4) or removal of the capsule (9) from the brewing unit (2), the first member (3) being slidably mounted relative to the supporting structure (11) along a line of movement (200) between the operating position and the home position, and vice versa, the second member (4) having a housing (41) which is configured to house the containment body (91) of the capsule (9) and which has an opening (411) and a concavity which face towards the first member (3), the first member (3) in the operating position closing the opening (411) of the housing (41) so that, in use, the perimetric flange (92) of the capsule (9) is interposed between the first member (3) and a perimetric edge (412) of the opening (411) of the housing (41) of the second member (4);
wherein the brewing unit (2) also comprises:
- at least one retaining element (5) which is configured to receive the perimetric flange (92) of the capsule (9), when the first member (3) is in the home position and the capsule (9) is inserted between the first member (3) and the second member (4), and is configured to retain the perimetric flange (92) of the capsule (9) during the movement of the first member (3) from the home position to the operating position; and
- at least one ejector (6) which is configured to eject the capsule (9) from the housing (41) of the second member (4) during the movement of the first member (3) from the operating position to the home position; and
wherein:
- the at least one retaining element (5) is slidably mounted relative to the supporting structure (11) and is movable between a receiving position, in which the at least one retaining element (5) is positioned to receive the perimetric flange (92) of the capsule (9), and a disengaging position, in which the at least one retaining element (5) is disengaged from the perimetric flange (92) of the capsule (9), the movement of the at least one retaining element (5) from the receiving position to the disengaging position comprising a first stretch which is parallel to the line of movement (200) of the first member (3) and a second stretch which is divergent from the line of movement (200) of the first member (3), so that in the second stretch the at least one retaining element (5) is shifted transversally to the line of movement (200) and, in use, is moved away from the perimetric flange (92) of the capsule (9);
- the at least one ejector (6) is slidably mounted relative to the supporting structure (11) and is movable relative to the second member (4), parallel to the line of movement (200) of the first member (3), between an extracted position and a retracted position;
- the first member (3) mechanically operates in conjunction with the at least one retaining element (5) and with the at least one ejector (6), in such a way that the movement of the first member (3) from the home position to the operating position causes the movement of the at least one retaining element (5) from the receiving position to the disengaging position and causes the movement of the at least one ejector (6) from the extracted position to the retracted position, and in such a way that the movement of the first member (3) from the operating position to the home position causes the movement of the at least one retaining element (5) from the disengaging position to the receiving position and causes the movement of the at least one ejector (6) from the retracted position to the extracted position;
- the at least one retaining element (5) and the at least one ejector (6) are parts separate from each other and are movable one relative to the other;
- the apparatus (1) comprises a guide which mechanically operates in conjunction with the at least one retaining element (5) to implement the transversal shifting of the at least one retaining element (5) in the second stretch of the movement;
**characterised in that**
the at least one ejector (6) has a thrust portion (61) configured to push the perimetric flange (92) of the capsule (9) away from the perimetric edge (412) during the shifting from the retracted position to the extracted position.

2. The apparatus (1) according to claim 1, wherein the guide extends along a flank of the brewing unit (2) and is made in the supporting structure (11), the guide comprising a lane (12) having a first guiding stretch (121), which is parallel to the line of movement (200) of the first member (3), and a second guiding stretch (122), which is divergent from said line of movement (200), the at least one retaining element (5) comprising a follower (55) which engages with said lane (12).

3. The apparatus (1) according to claim 1 or 2, wherein the first member (3) comprises a first thrust element (31) and a second thrust element (32) for moving the at least one retaining element (5), wherein the first thrust element (31) makes contact with and pushes the at least one retaining element (5) during the movement of the first member (3) from the home position to the operating position and wherein the second thrust element (32) makes contact with and pushes the at least one retaining element (5) during the movement of the first member (3) from the operating position to the home position, the first thrust element (31) being disengaged from the at least one retaining element (5) when the at least one retaining element (5) is in the disengaging position.

4. The apparatus (1) according to any one of claims 1 to 3, wherein the at least one retaining element (5) comprises a receiving portion (51), which defines a seat (514) for receiving the perimetric flange (92) of the capsule (9), a pin (52) and an arm (53) which connects the pin (52) to the receiving portion (51), the at least one retaining element (5) being rotatable about an axis of rotation defined by said pin (52),
wherein the rotation of the at least one retaining element (5) about the axis of rotation defined by the pin (52) is prevented by the guide in the first stretch of the movement and is allowed in the second stretch of the movement, so that the movement of the at least one retaining element (5) in the second stretch is a combination of a translating movement parallel to the line of movement (200) of the first member (3) and of a rotary movement about the axis of rotation defined by the pin (52).

5. The apparatus (1) according to claim 4 in combination with claim 2, wherein the follower (55) projects from the arm (53) and, when the follower (55) engages with the lane (12) in the second guiding stretch (122) of the lane (12), it makes the at least one retaining element (5) rotate about the axis of rotation.

6. The apparatus (1) according to any one of claims 1 to 5, wherein one of either the first member (3) or the at least one ejector (6) comprises a projecting tooth (34) and the other of either the first member (3) or the at least one ejector (6) comprises a contact element (622) for the projecting tooth (34), the projecting tooth (34) being spaced apart from the contact element (622) when the first member (3) is in the operating position and making contact with the contact element (622) during the movement of the first member (3) from the operating position to the home position, the contact between the projecting tooth (34) and the contact element (622) causing a mechanical constraint such that the at least one ejector (6) is dragged towards the retracted position by the first member (3) moving towards the home position.

7. The apparatus (1) according to claim 6, wherein the contact element is part of a slot (621) or of a track in which the projecting tooth (34) is received and can run, the slot (621) or the track extending parallel to the line of movement (200) and the contact element (622) being a stop for the projecting tooth (34).

8. The apparatus (1) according to claim 6 or 7, wherein the first member (3) comprises the projecting tooth (34) and the at least one ejector (6) comprises the contact element.

9. The apparatus (1) according to any one of claims 1 to 8, wherein the thrust portion (61) of the at least one ejector (6) forms a part of the perimetric edge (412) of the opening (411) of the housing (41) of the second member (4),
so that, when the at least one ejector (6) is in the retracted position, the thrust portion (61) and the second member (4) jointly define the perimetric edge (412) which in use is in contact with the perimetric flange (92) of the capsule (9), whilst when the at least one ejector (6) is in the extracted position the perimetric edge (412) is interrupted and the thrust portion (61) is spaced apart from the interrupted perimetric edge (412), the thrust portion (61) being interposed between the first member (3) and the second member (4).

10. The apparatus (1) according to any one of claims 1 to 9, wherein the at least one retaining element (5) and the at least one ejector (6) are positioned on a same flank of the brewing unit (2).

11. The apparatus (1) according to any one of claims 1 to 10, wherein the brewing unit (2) comprises a first and a second of said at least one retaining element (5), the first retaining element and the second retaining element being positioned on opposite flanks of the brewing unit (2) and symmetrically relative to a longitudinal plane of the brewing unit (2), and wherein the brewing unit (2) also comprises a first and a second of said at least one ejector (6), the first ejector and the second ejector being positioned on opposite flanks of the brewing unit (2) and symmetrically relative to the longitudinal plane of the brewing unit (2).

## Patentansprüche

1. Eine Vorrichtung (1) zur Zubereitung eines Getränks durch Aufbrühen einer in einer Kapsel (9) enthaltenen Lebensmittelsubstanz, die Kapsel (9) beinhaltet dabei einen becherförmigen Aufnahmekörper (91) und einen perimetrischen Flansch (92), der aus dem Aufnahmekörper (91) herausragt,
wobei die Vorrichtung (1) eine Stützstruktur (11) und eine Aufbrüheinheit (2) beinhaltet, die ein erstes Glied (3) und ein zweites Glied (4) beinhaltet, das erste Glied (3) ist dabei im Verhältnis zum zweiten Glied (4) zwischen einer Betriebsstellung, in der das erste Glied (3) und das zweite Glied (4) aneinander gekoppelt sind und sie eine Brühkammer (21) in der die Kapsel (9) im Gebrauch enthalten ist, bilden, und einer Grundstellung, in der das erste Glied (3) und das zweite Glied (4) in einem Abstand voneinander sind und im Gebrauch das Einsetzen der Kapsel (9) zwischen dem ersten Glied (3) und dem zweiten Glied (4) beziehungsweise das Entfernen der Kapsel (9) aus der Aufbrüheinheit (2) erlauben, beweglich, das erste Glied (3) ist dabei im Verhältnis zur Stützstruktur (11) auf einer Bewegungslinie (200) zwischen der Betriebsstellung und der Grundstellung und umgekehrt verschiebbar montiert, das zweite Glied (4) hat dabei ein Gehäuse (41), das dazu ausgelegt ist, den Behälterkörper (91) der Kapsel (9) aufzunehmen, und das eine Öffnung (41) und eine Wölbung hat, die zum ersten Glied (3) gerichtet sind, das erste Glied (3) schließt dabei in der Betriebsstellung die Öffnung (411) des Gehäuses (41), sodass der perimetrische Flansch (92) der Kapsel (9) sich im Gebrauch zwischen dem ersten Glied (3) und einem perimetrischen Rand (412) der Öffnung (411) des Gehäuses (41) des zweiten Glieds (4) befindet;
wobei die Aufbrüheinheit (2) auch Folgendes beinhaltet:
- mindestens ein Rückhalteelement (5) das dazu ausgelegt ist, den perimetrischen Flansch (92) der Kapsel (9) entgegenzunehmen, wenn das erste Glied (3) in der Grundstellung ist und die Kapsel (9) zwischen dem ersten Glied (3) und dem zweiten Glied (4) eingesetzt ist, und dazu ausgelegt ist, den perimetrischen Flansch (92) der Kapsel (9) während der Bewegung des ersten Glieds (3) von der Grundstellung in die Betriebsstellung zurückzuhalten; und
- mindestens einen Auswerfer (6), der dazu ausgelegt ist, die Kapsel (9) aus dem Gehäuse (41) des zweiten Glieds (4) auszuwerfen, während der Bewegung des ersten Glieds (3) von der Betriebsstellung in die Grundstellung; und
wobei:
- das mindestens eine Rückhalteelement (5) im Verhältnis zur Stützstruktur (11) verschiebbar montiert ist und zwischen einer Aufnahmeposition, in der das mindestens eine Rückhalteelement (5) platziert ist, um den perimetrischen Flansch (92) der Kapsel (9) entgegenzunehmen, und einer Ausrückposition, in der das mindestens eine Rückhalteelement (5) vom perimetrischen Flansch (92) der Kapsel (9) gelöst ist, beweglich ist, die Bewegung des mindestens einen Rückhalteelements (5) von der Aufnahmeposition in die Ausrückposition beinhaltet dabei einen ersten Streckenabschnitt, der parallel zur Bewegungslinie (200) des ersten Glieds (3) ist, und einen zweiten Streckenabschnitt, der von der Bewegungslinie (200) des ersten Glieds (3) abweicht, sodass das mindestens eine Rückhalteelement (5) auf dem zweiten Streckenabschnitt transversal zur Bewegungslinie (200) verschoben wird und im Gebrauch vom perimetrischen Flansch (92) der Kapsel (9) wegbewegt wird;
- der mindestens eine Auswerfer (6) im Verhältnis zur Stützstruktur (11) verschiebbar montiert ist und im Verhältnis zum zweiten Glied (4), parallel zur Bewegungslinie (200) des ersten Glieds (3), zwischen einer ausgefahrenen Position und einer zurückgezogenen Position beweglich ist;
- das erste Glied (3) mechanisch in Verbindung mit dem mindestens einen Rückhalteelement (5) und mit dem mindestens einen Auswerfer (6) arbeitet, solcherart, dass die Bewegung des ersten Glieds (3) von der Grundstellung in die Betriebsstellung die Bewegung des mindestens einen Rückhalteelements (5) von der Aufnahmeposition in die Ausrückposition verursacht und die Bewegung des mindestens einen Auswerfers (6) von der ausgefahrenen Position in die zurückgezogene Position verursacht, und solcherart, dass die Bewegung des ersten Glieds (3) von der Grundstellung in die Betriebsstellung die Bewegung des mindestens einen Rückhalteelements (5) von der Ausrückposition in die Aufnahmeposition verursacht und die Bewegung des mindestens einen Auswerfers (6) von der zurückgezogenen Position in die ausgefahrene Position verursacht;
- das mindestens eine Rückhalteelement (5) und der mindestens eine Auswerfer (6) voneinander getrennte Teile und im Verhältnis zueinander beweglich sind;
- die Vorrichtung (1) eine Führung beinhaltet, die mechanisch in Verbindung mit dem mindestens einen Rückhalteelement (5) arbeitet, um die transversale Verschiebung des mindestens einen Rückhalteelements (5) im zweiten Streckenabschnitt der Bewegung umzusetzen;
**gekennzeichnet dadurch, dass**
der mindestens eine Auswerfer (6) einen Schubabschnitt (61) hat, der dazu ausgelegt ist, während der Verschiebung von der zurückgezogenen Position in die ausgefahrene Position den perimetrischen Flansch (92) der Kapsel (9) vom perimetrischen Rand (412) wegzuschieben.

2. Die Vorrichtung (1) nach dem Patentanspruch 1, wobei sich die Führung an einer Flanke der Aufbrüheinheit (2) erstreckt und in der Stützstruktur (11) angefertigt ist, die Führung beinhaltet dabei eine Bahn (12), die dabei einen ersten Führungsabschnitt (121) hat, der parallel zur Bewegungslinie (200) des ersten Glieds (3) ist, und einen zweiten Führungsabschnitt (122), der von besagter Bewegungslinie (200) abweicht, das mindestens eine Rückhalteelement (5) beinhaltet dabei ein Nachlaufelement (55), das in besagte Bahn (12) eingreift.

3. Die Vorrichtung (1) nach dem Patentanspruch 1 oder 2, wobei das erste Glied (3) ein erstes Schubelement (31) und ein zweites Schubelement (32) beinhaltet, um das mindestens eine Rückhalteelement (5) zu bewegen, wobei das erste Schubelement (31) während der Bewegung des ersten Glieds (3) von der Grundstellung in die Betriebsstellung mit dem mindestens einen Rückhalteelement (5) Kontakt herstellt und es schiebt, und wobei das zweite Schubelement (32) während der Bewegung des ersten Glieds (3) von der Betriebsstellung in die Grundstellung mit dem mindestens einen Rückhalteelement (5) Kontakt herstellt und es schiebt, das erste Schubelement (31) ist dabei von dem mindestens einen Rückhalteelement (5) gelöst, wenn sich das mindestens eine Rückhalteelement (5) in der Ausrückposition befindet.

4. Die Vorrichtung (1) nach jedem der Patentansprüche 1 bis 3, wobei das mindestens eine Rückhalteelement (5) einen Aufnahmeabschnitt (51), der einen Sitz (514) definiert, um den perimetrischen Flansch (92) der Kapsel (9) entgegenzunehmen, einen Stift (52) und einen Arm (53), der den Stift (52) mit dem Aufnahmeabschnitt (51) verbindet, beinhaltet, das mindestens eine Rückhalteelement (5) ist dabei um eine Rotationsachse, die durch besagten Stift (52) definiert ist, drehbar,
wobei die Drehung des mindestens einen Rückhalteelements (5) um die von dem Stift (52) definierte Rotationsachse im ersten Streckenabschnitt der Bewegung durch die Führung verhindert wird und im zweiten Streckenabschnitt der Bewegung erlaubt ist, sodass die Bewegung des mindestens einen Rückhalteelements (5) im zweiten Streckenabschnitt eine Kombination aus einer Übersetzungsbewegung parallel zu der Bewegungslinie (200) des ersten Glieds (3) und einer Drehbewegung um die von dem Stift (52) definierte Rotationsachse ist.

5. Die Vorrichtung (1) nach dem Patentanspruch 4 zusammen mit dem Patentanspruch 2, wobei das Nachlaufelement (55) aus dem Arm (53) herausragt und, wenn das Nachlaufelement (55) im zweiten Führungsabschnitt (122) der Bahn (12) in die Bahn (12) eingreift, es dafür sorgt, dass sich das mindestens eine Rückhalteelement (5) um die Rotationsachse dreht.

6. Die Vorrichtung (1) nach jedem der Patentansprüche 1 bis 5, wobei eines der beiden Bauteile, entweder das erste Glied (3) oder der mindestens eine Auswerfer (6), einen herausragenden Zahn (34) beinhaltet und das andere der beiden Bauteile, entweder das erste Glied (3) oder der mindestens eine Auswerfer (6), ein Kontaktelement (622) für den herausragenden Zahn (34) beinhaltet, der herausragende Zahn (34) befindet sich dabei in einem Abstand vom Kontaktelement (622), wenn das erste Glied (3) in der Betriebsstellung ist, und stellt dabei während der Bewegung des ersten Glieds (3) von der Betriebsstellung in die Grundstellung Kontakt mit dem Kontaktelement (622) her, der Kontakt zwischen dem herausragenden Zahn (34) und dem Kontaktelement (622) verursacht dabei eine mechanische Beschränkung, sodass der mindestens eine Auswerfer (6) durch das erste Glied (3), das sich in Richtung der Grundstellung bewegt, in Richtung der zurückgezogenen Position gezogen wird.

7. Die Vorrichtung (1) nach dem Patentanspruch 6, wobei das Kontaktelement Teil eines Schlitzes (621) oder einer Bahn ist, in dem/der der herausragende Zahn (34) entgegengenommen wird und verlaufen kann, der Schlitz (621) oder die Bahn erstreckt sich dabei parallel zur Bewegungslinie (200) und das Kontaktelement (622) ist dabei ein Anschlag für den herausragenden Zahn (34).

8. Die Vorrichtung (1) nach dem Patentanspruch 6 oder 7, wobei das erste Glied (3) den herausragenden Zahn (34) beinhaltet und der mindestens eine Auswerfer (6) das Kontaktelement beinhaltet.

9. Die Vorrichtung (1) nach jedem der Patentansprüche 1 bis 8, wobei der erste Schubabschnitt (61) des mindestens einen Auswerfers (6) einen Teil eines perimetrischen Rands (412) der Öffnung (411) des Gehäuses (41) des zweiten Glieds (4) bildet,
sodass, wenn der mindestens eine Auswerfer (6) in der zurückgezogenen Stellung ist, der Schubabschnitt (61) und das zweite Glied (4) gemeinsam den perimetrischen Rand (412) definieren, der im Gebrauch mit dem perimetrischen Flansch (92) der Kapsel (9) in Kontakt steht, während, wenn der mindestens eine Auswerfer (6) in der ausgefahrenen Position ist, der perimetrische Rand (412) unterbrochen wird und der Schubabschnitt (61) in einem Abstand von dem unterbrochenen Rand (412) ist, der Schubabschnitt (61) befindet sich dabei zwischen dem ersten Glied (3) und dem zweiten Glied (4).

10. Die Vorrichtung (1) nach jedem der Patentansprüche 1 bis 9, wobei das mindestens eine Rückhalteelement (5) und der mindestens eine Auswerfer (6) an derselben Flanke der Aufbrüheinheit (2) platziert sind.

11. Die Vorrichtung (1) nach jedem der Patentansprüche 1 bis 10, wobei die Aufbrüheinheit (2) ein erstes und ein zweites des besagten mindestens einen Rückhalteelements (5) beinhaltet, das erste Rückhalteelement und das zweite Rückhalteelement befinden sich dabei an gegenüber liegenden Flanken der Aufbrüheinheit (2) und symmetrisch im Verhältnis zu einer Längsebene der Aufbrüheinheit (2), und wobei die Aufbrüheinheit (2) auch einen ersten und einen zweiten des besagten mindestens einen Auswerfers (6) beinhaltet, der erste Auswerfer und der zweite Auswerfer befinden sich dabei an gegenüber liegenden Flanken der Aufbrüheinheit (2) und symmetrisch im Verhältnis zu einer Längsebene der Aufbrüheinheit (2).

## Revendications

1. Un appareil (1) pour la préparation d'une boisson par infusion d'une substance alimentaire contenue dans une capsule (9), la capsule (9) comprenant un corps de confinement (91) en forme de coupe et une bride périmétrique (92) dépassant du corps de confinement (91),
dans lequel l'appareil (1) comprend une structure de support (11) et une unité d'infusion (2) comprenant un premier organe (3) et un deuxième organe (4), le premier organe (3) étant mobile par rapport au deuxième organe (4) entre une position opérationnelle, dans laquelle le premier organe (3) et le deuxième organe (4) sont accouplés l'un avec l'autre et forment une chambre d'infusion (21) dans laquelle, lors de utilisation, la capsule (9) est contenue, et une position de repos, dans laquelle le premier organe (3) et le deuxième organe (4) sont espacés l'un de l'autre et permettent, lors de utilisation, l'insertion de la capsule (9) entre le premier organe (3) et le deuxième organe (4) ou l'extraction de la capsule (9) de l'unité d'infusion (2), le premier organe (3) étant monté de façon coulissante par rapport à la structure de support (11) le long d'une direction de mouvement (200) entre la position opérationnelle et la position de repos, et inversement, le deuxième organe (4) ayant un logement (41) qui est configuré pour loger le corps de confinement (91) de la capsule (9) et qui a une ouverture (411) et une concavité qui sont orientées vers le premier organe (3), le premier organe (3) dans la position opérationnelle fermant l'ouverture (411) du logement (41) de sorte que, lors de l'utilisation, la bride périmétrique (92) de la capsule (9) est interposée entre le premier organe (3) et un bord périmétrique (412) de l'ouverture (411) du logement (41) du deuxième organe (4) ;
dans lequel l'unité d'infusion (2) comprend également :
- au moins un élément de retenue (5) qui est configuré pour recevoir la bride périmétrique (92) de la capsule (9), lorsque le premier organe (3) est dans la position de repos et que la capsule (9) est insérée entre le premier organe (3) et le deuxième organe (4), et est configuré pour retenir la bride périmétrique (92) de la capsule (9) pendant le mouvement du premier organe (3) de la position de repos à la position opérationnelle ; et
- au moins un éjecteur (6) qui est configuré pour éjecter la capsule (9) du logement (41) du deuxième organe (4) pendant le mouvement du premier organe (3) de la position opérationnelle à la position de repos ; et
dans lequel :
- ledit au moins un élément de retenue (5) est monté de façon coulissante par rapport à la structure de support (11) et est mobile entre une position de réception, dans laquelle ledit au moins un élément de retenue (5) est positionné pour recevoir la bride périmétrique (92) de la capsule (9), et une position de désengagement, dans laquelle ledit au moins un élément de retenue (5) est désengagé de la bride périmétrique (92) de la capsule (9), le mouvement dudit au moins un élément de retenue (5) de la position de réception à la position de désengagement comprenant un premier tronçon qui est parallèle à la direction de mouvement (200) du premier organe (3) et un deuxième tronçon qui est divergent de la direction de mouvement (200) du premier organe (3), de sorte que dans le deuxième tronçon ledit au moins un élément de retenue (5) est déplacé transversalement à la direction de mouvement (200) et, lors de l'utilisation, est éloigné de la bride périmétrique (92) de la capsule (9) ;
- ledit au moins un éjecteur (6) est monté de façon coulissante par rapport à la structure de support (11) et est mobile par rapport au deuxième organe (4), parallèlement à la direction de mouvement (200) du premier organe (3), entre une position sortie et une position rentrée ;
- le premier organe (3) coopère mécaniquement avec ledit au moins un élément de retenue (5) et avec ledit au moins un éjecteur (6), de manière à ce que le mouvement du premier organe (3) de la position de repos à la position opérationnelle cause le mouvement dudit au moins un élément de retenue (5) de la position de réception à la position de désengagement et cause le mouvement dudit au moins un éjecteur (6) de la position sortie à la position rentrée, et de manière à ce que le mouvement du premier organe (3) de la position opérationnelle à la position de repos cause le mouvement dudit au moins un élément de retenue (5) de la position de désengagement à la position de réception et cause le mouvement dudit au moins un éjecteur (6) de la position rentrée à la position sortie ;
- ledit au moins un élément de retenue (5) et ledit au moins un éjecteur (6) sont des pièces distinctes l'une de l'autre et sont mobiles l'une par rapport à l'autre ;
- l'appareil (1) comprend un guide qui coopère mécaniquement avec ledit au moins un élément de retenue (5) pour l'exécution du déplacement transversal dudit au moins un élément de retenue (5) dans le deuxième tronçon du mouvement ;
**caractérisé en ce que**
ledit au moins un éjecteur (6) a une portion de poussée (61) configurée pour pousser la bride périmétrique (92) de la capsule (9) en éloignement du bord périmétrique (412) pendant le déplacement de la position rentrée à la position sortie.

2. L'appareil (1) selon la revendication 1, dans lequel le guide s'étend le long d'un flanc de l'unité d'infusion (2) et est réalisé dans la structure de support (11), le guide comprenant une voie (12) ayant un premier tronçon de guidage (121), qui est parallèle à la direction de mouvement (200) du premier organe (3), et un deuxième tronçon de guidage (122), qui est divergent de ladite direction de mouvement (200), ledit au moins un élément de retenue (5) comprenant un suiveur (55) qui s'assujettit avec ladite voie (12).

3. L'appareil (1) selon la revendication 1 ou 2, dans lequel le premier organe (3) comprend un premier élément de poussée (31) et un deuxième élément de poussée (32) pour mouvoir ledit au moins un élément de retenue (5), dans lequel le premier élément de poussée (31) vient en contact avec et pousse ledit au moins un élément de retenue (5) pendant le mouvement du premier organe (3) de la position de repos à la position opérationnelle et dans lequel le deuxième élément de poussée (32) vient en contact avec et pousse ledit au moins un élément de retenue (5) pendant le mouvement du premier organe (3) de la position opérationnelle à la position de repos, le premier élément de poussée (31) étant désengagé dudit au moins un élément de retenue (5) lorsque ledit au moins un élément de retenue (5) est dans la position de désengagement.

4. L'appareil (1) selon l'une quelconque des revendications de 1 à 3, dans lequel ledit au moins un élément de retenue (5) comprend une portion de réception (51), qui définit un siège (514) pour recevoir la bride périmétrique (92) de la capsule (9), une goupille (52) et un bras (53) qui relie la goupille (52) à la portion de réception (51), ledit au moins un élément de retenue (5) pouvant tourner autour d'un axe de rotation défini par ladite goupille (52),
dans lequel la rotation dudit au moins un élément de retenue (5) autour de l'axe de rotation défini par la goupille (52) est empêchée par le guide dans le premier tronçon du mouvement et est permise dans le deuxième tronçon du mouvement, de sorte que le mouvement dudit au moins un élément de retenue (5) dans le deuxième tronçon est une combinaison d'un mouvement de translation parallèle à la direction de mouvement (200) du premier organe (3) et d'un mouvement de rotation autour de l'axe de rotation défini par la goupille (52).

5. L'appareil (1) selon la revendication 4 en combinaison avec la revendication 2, dans lequel le suiveur (55) dépasse du bras (53) et, lorsque le suiveur (55) s'assujettit avec la voie (12) dans le deuxième tronçon de guidage (122) de la voie (12), il fait tourner ledit au moins un élément de retenue (5) autour de l'axe de rotation.

6. L'appareil (1) selon l'une quelconque des revendications de 1 à 5, dans lequel l'un entre le premier organe (3) et ledit au moins un éjecteur (6) comprend une dent en saillie (34) et l'autre entre le premier organe (3) et ledit au moins un éjecteur (6) comprend un élément de contact (622) pour la dent en saillie (34), la dent en saillie (34) étant espacée de l'élément de contact (622) lorsque le premier organe (3) est dans la position opérationnelle et venant en contact avec l'élément de contact (622) pendant le mouvement du premier organe (3) de la position opérationnelle à la position de repos, le contact entre la dent en saillie (34) et l'élément de contact (622) déterminant une contrainte mécanique telle que ledit au moins un éjecteur (6) est entraîné vers la position rentrée par le premier organe (3) en mouvement vers la position de repos.

7. L'appareil (1) selon la revendication 6, dans lequel l'élément de contact fait partie d'une fente (621) ou d'une piste dans laquelle la dent en saillie (34) est reçue et peut courir, la fente (621) ou la piste s'étendant parallèlement à la direction de mouvement (200) et l'élément de contact (622) constituant un arrêt pour la dent en saillie (34).

8. L'appareil (1) selon la revendication 6 ou 7, dans lequel le premier organe (3) comprend la dent en saillie (34) et ledit au moins un éjecteur (6) comprend l'élément de contact.

9. L'appareil (1) selon l'une quelconque des revendications de 1 à 8, dans lequel la portion de poussée (61) dudit au moins un éjecteur (6) forme une partie du bord périmétrique (412) de l'ouverture (411) du logement (41) du deuxième organe (4),
de sorte que, lorsque ledit au moins un éjecteur (6) est dans la position rentrée, la portion de poussée (61) et le deuxième organe (4) définissent conjointement le bord périmétrique (412) qui, lors de l'utilisation, est en contact avec la bride périmétrique (92) de la capsule (9), tandis que, lorsque ledit au moins un éjecteur (6) est dans la position sortie, le bord périmétrique (412) est interrompu et la portion de poussée (61) est espacée du bord périmétrique (412) interrompu, la portion de poussée (61) étant interposée entre le premier organe (3) et le deuxième organe (4).

10. L'appareil (1) selon l'une quelconque des revendications de 1 à 9, dans lequel ledit au moins un élément de retenue (5) et ledit au moins un éjecteur (6) sont positionnés sur un même flanc de l'unité d'infusion (2).

11. L'appareil (1) selon l'une quelconque des revendications de 1 à 10, dans lequel l'unité d'infusion (2) comprend un premier et un deuxième dudit au moins un élément de retenue (5), le premier élément de retenue et le deuxième élément de retenue étant positionnés sur des flancs opposés de l'unité d'infusion (2) et symétriquement par rapport à un plan longitudinal de l'unité d'infusion (2), et dans lequel l'unité d'infusion (2) comprend également un premier et un deuxième dudit au moins un éjecteur (6), le premier éjecteur et le deuxième éjecteur étant positionnés sur des flancs opposés de l'unité d'infusion (2) et symétriquement par rapport au plan longitudinal de l'unité d'infusion (2).
